# EUROPEAN PATENT SPECIFICATION

(11) **EP 2 519 686 B1**
(45) Date of publication and mention of the grant of the patent: **10.08.2016**
(21) Application number: 10792931.7
(22) Date of filing: 17.12.2010
(51) Int. Cl.: D06F 58/20, D06F 58/24

(54) **HEAT PUMP LAUNDRY DRYER**
WÄRMEPUMPENWÄSCHETROCKNER
SÈCHE-LINGE À POMPE À CHALEUR

(30) Priority: 31.12.2009 TR 200910090
(43) Date of publication of application: 07.11.2012
(73) Proprietor: Arçelik Anonim Sirketi, 34950 Istanbul (TR)
(72) Inventor: BALIOGLU, Onder, 34950 Istanbul (TR); HOCAOGLU, Sabahattin, 34950 Istanbul (TR); SONMEZ, Huda, 34950 Istanbul (TR)
(86) International application number: PCT/EP2010/070008
(87) International publication number: WO 2011/080116

(56) References cited:
- EP-A1- 0 999 302
- EP-A1- 2 058 427
- DE-A1- 4 409 607
- DE-A1- 19 638 865

## Description

The present invention relates to a heat pump laundry dryer.

In laundry dryers, the heat pump used for drying the laundry is composed of flow ducts wherein the refrigerant flows, a compressor that provides circulation by pressurizing the refrigerant, an evaporator and a condenser, and the drying process is performed by passing the processing air over the laundry. The condenser disposed in the heat pump functions as the heater and the evaporator functions as the condenser. The processing air is heated while passing from the condenser, delivered over the laundry as being heated and after dehumidifying the laundry, leaves its moisture while passing over the evaporator. In the cycle wherein the refrigerant circulates in the flow ducts, the refrigerant that is delivered from the compressor to the condenser with increased pressure and temperature enters the condenser by passing through the capillary tube and absorbs heat in order to receive moisture from the processing air in the evaporator. During the drying air cycle, the temperature of the processing air coming over the evaporator increases as the laundry in the drum is heated and respectively the working temperatures of the elements in the refrigerant cycle, that is the compressor, the evaporator and the condenser also increase continuously. The increase of temperature in the processing air affects the refrigerant circulating in the cycle of the heat pump and when not intervened, the evaporator is filled with the refrigerant in vapor phase having poor heat transfer capability, the overheating problem arises and the dehumidifying capacity of the overheated evaporator decreases. In the heat pump, the temperature of the refrigerant reaches around 45 - 50 degrees at the compressor inlet as a result of overheating in the refrigerant line and the temperature at the compressor outlet becomes above the inlet temperature. The refrigerant leaving the compressor with high temperature causes both the condensing temperature and the evaporating temperature to increase. Overheating of the refrigerant causes the compressor to operate within an inefficient temperature range and energy consumption increases as a result of this.

In the state of the art German Patent No. DE4409607, in a dryer with a heat pump, embodiments are explained that relate to the prevention of overheating problem which occurs during the refrigerant cycle.

The aim of the present invention is the realization of a heat pump laundry dryer that is prevented from overheating.

The heat pump laundry dryer realized in order to attain the aim of the present invention has a refrigerant line composed of flow ducts wherein the refrigerant flows, a heat exchanger is disposed at the portion of the refrigerant line between the evaporator and the compressor and the refrigerant is provided to be cooled before entering the compressor.

In the present invention, the laundry dryer comprises a temperature sensor that detects the temperature in the refrigerant line between the evaporator and the compressor and a control unit which detects whether or not there is overheating in the heat pump by evaluating the data received from the temperature sensor. Furthermore a three-way valve is disposed in the refrigerant line prior to the heat exchanger and a by-pass line is provided between the valve and the compressor.

The control unit provides the valve to direct the refrigerant to the compressor through the by-pass line at the beginning of the drying process when overheating of the heat pump has not yet started.

The control unit provides the valve to direct the refrigerant to the compressor through the heat exchanger if the control unit detects that overheating in the heat pump has started in accordance with the temperature data received from the temperature sensor.

In an embodiment of the present invention, a cooling fan is used in the heat pump laundry dryer for cooling the compressor and the heat exchanger is disposed between the cooling fan and the compressor to remain on the refrigerant line.

In another embodiment of the present invention, a condensation tray is used in the heat pump laundry dryer wherein the water condensed in the evaporator is collected and the water collected in the condensation tray is discharged by a pump by being passed through the heat exchanger, the cooling effectiveness of the heat exchanger is increased.

In the heat pump laundry dryer, the problem of overheating is prevented by means of disposing the heat exchanger at the compressor inlet portion of the refrigerant line and the efficiency of the compressor is increased.

The laundry dryer realized in order to attain the aim of the present invention is illustrated in the attached figures, where:

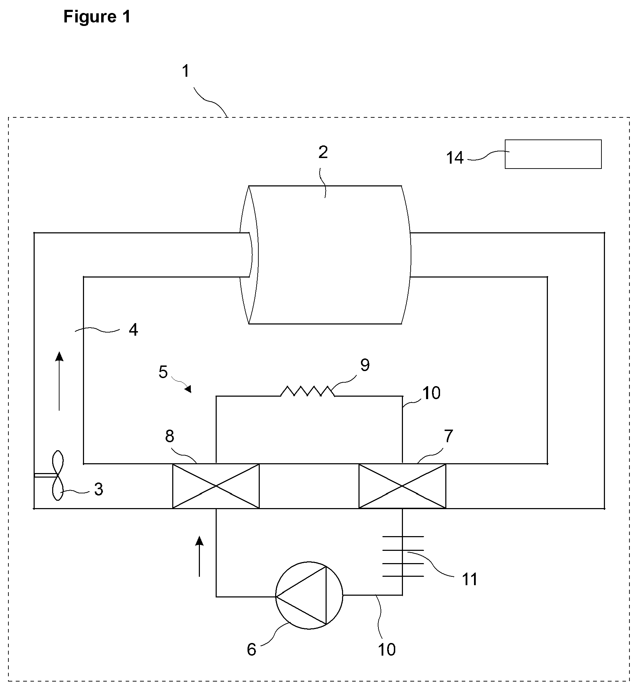

Figure 1 - is the schematic view of a heat pump laundry dryer wherein a heat exchanger is provided on the refrigerant line.
Figure 2 - is the schematic view of a heat pump laundry dryer in another embodiment of the present invention.
Figure 3 - is the schematic view of a heat pump laundry dryer comprising the compressor cooling fan.
Figure 4 - is the schematic view of a heat pump laundry dryer comprising the evaporator condensation tray.

The elements illustrated in the figures are numbered as follows:
1. Laundry dryer
2. Drum
3. Processing air fan
4. Air circulating duct
5. Heat pump
6. Compressor
7. Evaporator
8. Condenser
9. Capillary tube
10. Refrigerant line
11. Heat exchanger
12. Cooling fan
13. Temperature sensor
14. Control unit
15. Valve
16. By-pass line
17. Condensation tray
18. Condensing water line
19. Pump

The laundry dryer (1) comprises a drum (2) wherein the laundry to be dried is placed, an air circulating duct (4) wherein the processing air cycle is performed by a processing air fan (3) and a heat pump (5) wherein the refrigerant cycle is performed.

The heat pump (5) comprises a compressor (6) that provides aspiration and compressing of the refrigerant, an evaporator (7) providing the processing air in the air circulating duct (4) to be dehumidified, a condenser (8) providing the dehumidified processing air to be heated, a capillary tube (9) disposed between the condenser (8) and the evaporator (7) and a refrigerant line (10) that provides the refrigerant compressed by the compressor (6) to be delivered to the compressor (6) after flowing through the condenser (8), the capillary tube (9) and the evaporator (7) in that order.

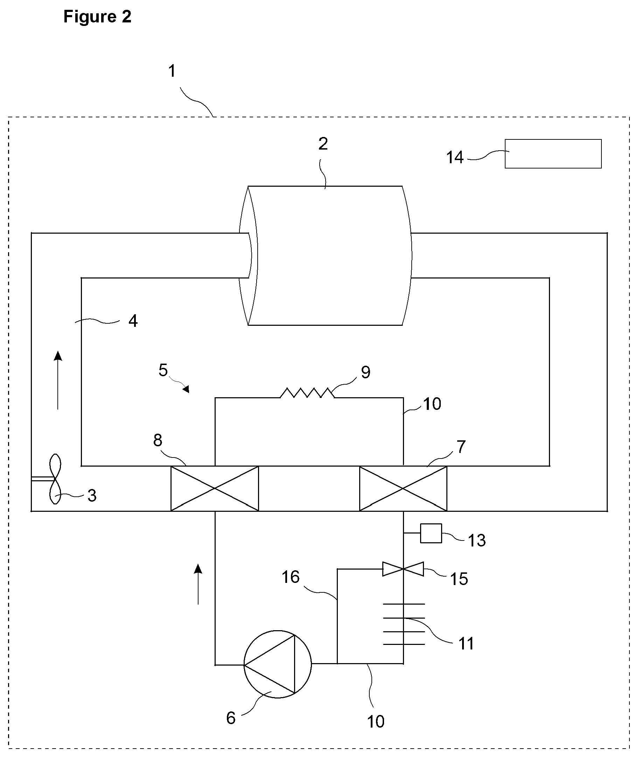

The laundry dryer (1) of the present invention comprises a heat exchanger (11) disposed at the portion of the refrigerant line (10) between the evaporator (7) and the compressor (6) and which provides the refrigerant to be cooled before entering the compressor (6) (Figure 2, Figure 3, Figure 4, Figure 5).

The heat exchanger (11) decreases the temperature of the refrigerant entering to the compressor (6) in the portion of the refrigerant line (10) between the evaporator (7) and the compressor (6). Decreasing the temperature of the refrigerant entering to the compressor (6) provides in enchainment to also decrease the compressor (6) exit temperature, the condenser (8) temperature and the evaporator (7) temperature. Consequently, the problem of overheating in the heat pump (5) is prevented and also the compressor (6) is provided to operate within a temperature range that improves efficiency. The heat exchanger (11) prevents overheating of the heat pump (5) by cooling the refrigerant in the stage when the refrigerant passes through the compressor (6), in other words at the beginning of the refrigerant cycle.

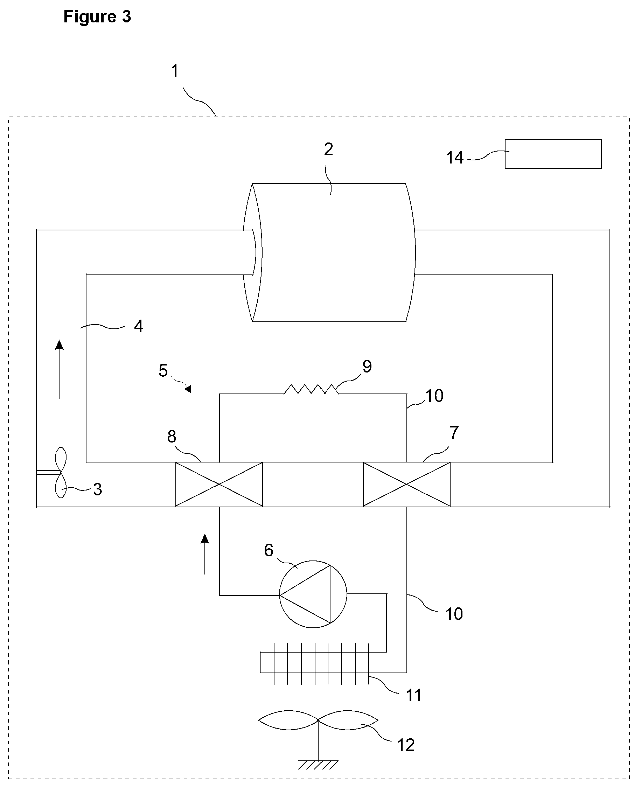

In the present invention, the laundry dryer (1) comprises a temperature sensor (13) that detects the temperature in the refrigerant line (10) between the evaporator (7) and the compressor (6), a control unit (14) that detects whether or not there is overheating in the heat pump (5) by evaluating the data received from the temperature sensor (13), a valve (15) disposed prior to the heat exchanger (11) in the refrigerant line (10) between the evaporator (7) and the compressor (6) and which directs the refrigerant and a by-pass line (16) located between the valve (15) and the compressor (6) inlet which provides the refrigerant received from the evaporator (7) to be delivered to the compressor (6) (Figure 3).

In an embodiment, the control unit (14) provides the valve (15) to direct the refrigerant directly to the compressor (6) through the by-pass line (16) at the beginning of the drying process when the heat pump (5) is not overheated.

The control unit (14) provides the valve (15) to direct the refrigerant to the compressor (6) through the heat exchanger (11) if the control unit (14) detects overheating in the heat pump (5) in accordance with the temperature data received from the temperature sensor (13).

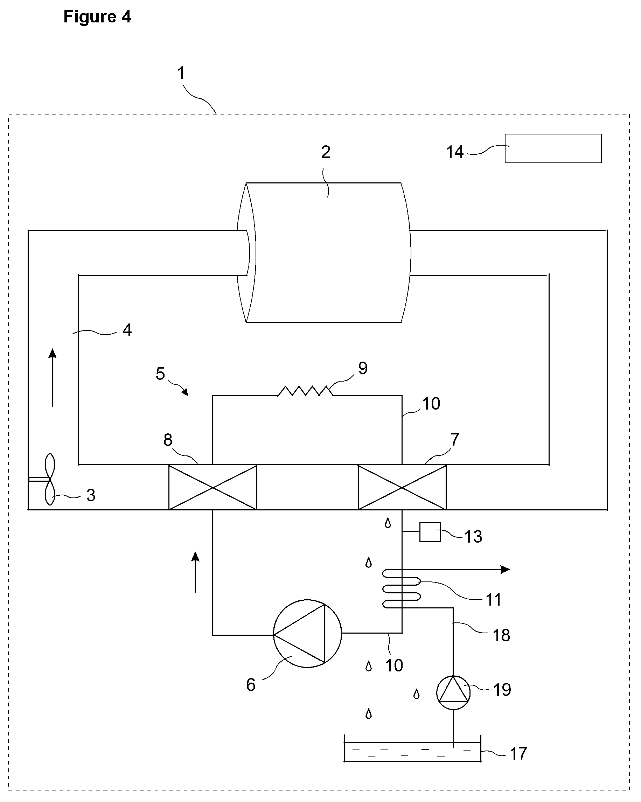

In an embodiment of the present invention, the laundry dryer (1) comprises a cooling fan (12) that provides cooling of the compressor (6), the refrigerant line (10) between the evaporator (7) and the compressor (6) is arranged so as to pass between the cooling fan (12) and the compressor (6) and the heat exchanger (11) is disposed at the portion of the refrigerant line (10) extending between the cooling fan (12) and the compressor (6) (Figure 4). The cooling fan (12) increases the cooling effect of the heat exchanger (11).

In another embodiment of the present invention, the laundry dryer (1) comprises a condensation tray (17) wherein the water condensed in the evaporator (7) collects, the tube shaped heat exchanger (11) disposed on the refrigerant line (10) between the evaporator (7) and the compressor (6) and a condensing water line (18) having a pump (19) that provides the water in the condensation tray (17) to be discharged by being passed through the heat exchanger (11) (Figure 5). In this embodiment, the cooling effect of the heat exchanger (11) is increased by using the water collected in the condensation tray (17).

In this embodiment, the control unit (14) provides the water in the condensation tray (17) to be discharged by being passed through the condensing water line (18) and the heat exchanger (11) by operating the pump (19) if the control unit (14) detects overheating in the heat pump (5) according to the data received from the temperature sensor (13).

In the laundry dryer (1) of the present invention, the problem of overheating in the heat pump (5) is prevented and the efficiency of the compressor (6) is increased by means of disposing the heat exchanger (11) at the portion of the refrigerant line (10) of the compressor (6) inlet.

It is to be understood that the present invention is not limited by the embodiments disclosed above and a person skilled in the art can easily introduce different embodiments. These should be considered within the scope of the protection postulated by the claims of the present invention.

## Claims

1. A laundry dryer (1) comprising a drum (2) wherein laundry to be dried is placed, an air circulating duct (4) wherein the processing air cycle is performed by a processing air fan (3) and a heat pump (5) wherein the refrigerant cycle is performed, having a compressor (6) that provides aspiration and compression of the refrigerant, an evaporator (7) providing the processing air in the air circulating duct (4) to be dehumidified, a condenser (8) providing the dehumidified processing air to be heated, a capillary tube (9) disposed between the condenser (8) and the evaporator (7) and a refrigerant line (10) that provides the refrigerant compressed by the compressor (6) to be delivered to the compressor (6) after flowing through the condenser (8), the capillary tube (9) and the evaporator (7) in that order, a heat exchanger (11) disposed at the portion of the refrigerant line (10) between the evaporator (7) and the compressor (6) and that provides the refrigerant to be cooled before entering the compressor (6), a temperature sensor (13) that detects the temperature in the refrigerant line (10) between the evaporator (7) and the compressor (6), a control unit (14) that detects whether or not there is overheating in the heat pump (5) by evaluating the data received from the temperature sensor (13), **characterized by** a valve (15) disposed prior to the heat exchanger (11) in the refrigerant line (10) between the evaporator (7) and the compressor (6) and a by-pass line (16) located between the valve (15) and the compressor (6) inlet which provides the refrigerant received from the evaporator (7) to be delivered to the compressor (6).

2. A laundry dryer (1) as in claim 1, **characterized by** the control unit (14) that provides the valve (15) to direct the refrigerant to the compressor (6) through the by-pass line (16) at the beginning of the drying process when the heat pump (5) is not overheated.

3. A laundry dryer (1) as in claim 1, **characterized by** the control unit (14) that provides the valve (15) to direct the refrigerant to the compressor (6) through the heat exchanger (11) if the control unit (14) detects overheating in the heat pump (5) according to the temperature data received from the temperature sensor (13).

4. A laundry dryer (1) as in any one of the above claims, **characterized by** a cooling fan (12) that provides cooling of the compressor (6) and the heat exchanger (11) that is disposed at the portion of the refrigerant line (10), between the evaporator (7) and the compressor (6), extending between the cooling fan (12) and the compressor (6).

5. A laundry dryer (1) as in any one of the above claims, **characterized by** a condensing water line (18) having a condensation tray (17) wherein the water condensed in the evaporator (7) collects, the tube shaped heat exchanger (11) disposed on the refrigerant line (10) between the evaporator (7) and the compressor (6) and a pump (19) that provides the water in the condensation tray (17) to be discharged by being passed through the heat exchanger (11).

6. A laundry dryer (1) as in claim 5, **characterized by** the control unit (14) that provides the water in the condensation tray (17) to be discharged by being passed through the condensing water line (18) and the heat exchanger (11) by operating the pump (19) if the control unit (14) detects overheating in the heat pump (5) according to the data received by means of the temperature sensor (13).

## Patentansprüche

1. Wäschetrockner (1), umfassend eine Trommel (2), in die zu trocknende Wäsche gegeben wird, einen Luftzirkulationskanal (4), in dem der Prozessluftzyklus von einem Prozessluftgebläse (3) durchgeführt wird, und eine Wärmepumpe (5), in der der Kältemittelzyklus durchgeführt wird, aufweisend einen Kompressor (6), der das Ansaugen und Verdichten des Kältemittels ermöglicht, einen Verdampfer (7), der es ermöglicht, dass die Prozessluft in dem Luftzirkulationskanal (4) entfeuchtet wird, einen Kondensator (8), der es ermöglicht, dass die entfeuchtete Prozessluft erwärmt wird, ein Kapillarrohr (9), das zwischen dem Kondensator (8) und dem Verdampfer (7) angeordnet ist, und eine Kältemittelleitung (10), die es ermöglicht, dass vom Kompressor (6) verdichtetes Kältemittel an den Kompressor (6) geleitet wird, nachdem es in der aufgeführten Reihenfolge durch den Kondensator (8), das Kapillarrohr (9) und den Verdampfer (7) geströmt ist, einen Wärmetauscher (11), der an dem Abschnitt der Kältemittelleitung (10) zwischen dem Verdampfer (7) und dem Kompressor (6) angeordnet ist und es ermöglicht, dass das Kältemittel gekühlt wird, bevor es in den Kompressor (6) tritt, einen Temperatursensor (13), der die Temperatur in der Kältemittelleitung (10) zwischen dem Verdampfer (7) und dem Kompressor (6) erfasst, eine Steuereinheit (14), die erfasst, ob eine Überhitzung in der Wärmepumpe (5) vorliegt, indem sie die vom Temperatursensor (13) empfangenen Daten auswertet, **gekennzeichnet durch** ein Ventil (15), das vor dem Wärmetauscher (11) in der Kältemittelleitung (10) zwischen dem Verdampfer (7) und dem Kompressor (6) angeordnet ist, und eine Umgehungsleitung (16), die zwischen dem Ventil (15) und dem Einlass des Kompressors (6) angeordnet ist und es ermöglicht, das das Verdampfer (7) empfangene Kältemittel an den Kompressor (6) geleitet wird.

2. Wäschetrockner (1) nach Anspruch 1, **dadurch gekennzeichnet, dass** die Steuereinheit (14) es dem Ventil (15) ermöglicht, zum Beginn des Trocknungsvorgangs das Kältemittel durch die Umgehungsleitung (16) an den Kompressor (6) zu leiten, wenn die Wärmepumpe (5) nicht überhitzt ist.

3. Wäschetrockner (1) nach Anspruch 1, **dadurch gekennzeichnet, dass** die Steuereinheit (14) es dem Ventil (15) ermöglicht, das Kältemittel an den Kompressor (6) durch den Wärmetauscher (11) zu leiten, wenn die Steuereinheit (14) anhand der vom Temperatursensor (13) empfangenen Temperaturdaten eine Überhitzung in der Wärmepumpe (5) erfasst.

4. Wäschetrockner (1) nach einem der vorangehenden Ansprüche, **gekennzeichnet durch** ein Kühlgebläse (12), das eine Kühlung des Kompressors (6) und des Wärmetauschers (11) ermöglicht und in dem Abschnitt der Kältemittelleitung (10) zwischen dem Verdampfer (7) und dem Kompressor (6) angeordnet ist und sich zwischen dem Kühlgebläse (12) und dem Kompressor (6) erstreckt.

5. Wäschetrockner (1) nach einem der vorangehenden Ansprüche, **gekennzeichnet durch** eine Kondensationswasserleitung (18) mit einer Kondensationswanne (17), in der sich das im Verdampfer (7) kondensierte Wasser sammelt, wobei der rohrförmige Wärmetauscher (11) an der Kältemittelleitung (10) zwischen dem Verdampfer (7) und dem Kompressor (6) angeordnet ist, und eine Pumpe (19), die es ermöglicht, dass das Wasser in der Kondensationswanne (17) abgelassen wird, indem es **durch** den Wärmetauscher (11) geleitet wird.

6. Wäschetrockner (1) nach Anspruch 5, **dadurch gekennzeichnet, dass** die Steuereinheit (14) es ermöglicht, dass das Wasser in der Kondensationswanne (17) abgelassen wird, indem es durch die Kondensationswasserleitung (18) und den Wärmetauscher (11) geleitet wird, indem die Pumpe (19) betätigt wird, wenn die Steuereinheit (14) anhand der mithilfe des Temperatursensors (13) empfangenen Daten eine Überhitzung in der Wärmepumpe (5) erfasst.

## Revendications

1. Un sèche-linge (1) comprenant un tambour (2) dans lequel le linge à sécher est placé, un conduit de circulation d'air (4) dans lequel le cycle de l'air de processus est effectué par un ventilateur d'air de processus (3), et une pompe à chaleur (5) dans laquelle le cycle du fluide frigorigène est effectué et qui présente un compresseur (6) permettant la succion et la compression du fluide frigorigène, un évaporateur (7) qui permet la déshumidification de l'air de processus dans le conduit de circulation d'air (4), un condenseur (8) qui permet le chauffage de l'air de processus déshumidifié, un tube capillaire (9) qui est disposé entre le condenseur (8) et l'évaporateur (7), et une conduite de fluide frigorigène (10) qui permet au fluide frigorigène comprimé par le compresseur (6) d'être livré au compresseur (6) après avoir écoulé à travers le condenseur (8), le tube capillaire (9) et à l'évaporateur (7) dans cet ordre, un échangeur de chaleur (11) qui est disposé à la partie de la conduite de fluide frigorigène (10) entre l'évaporateur (7) et le compresseur (6) et qui permet le refroidissement du fluide frigorigène avant d'entrer dans le compresseur (6), un capteur de température (13) qui détecte la température dans la conduite du fluide frigorigène (10) entre l'évaporateur (7) et le compresseur (6), une unité de commande (14) qui détermine s'il y a une surchauffe dans la pompe à chaleur (5) en évaluant les données reçues du capteur de température (13), **caractérisé par** une soupape (15) qui est disposée avant l'échangeur de chaleur (11) dans la conduite de fluide frigorigène (10) entre l'évaporateur (7) et le compresseur (6) et par une ligne de by-pass (16) qui est située entre la soupape (15) et l'entrée du compresseur (6), qui permet au fluide frigorigène reçu à partir de l'évaporateur (7) d'être délivré au compresseur (6).

2. Un sèche-linge (1) selon dans la Revendication 1, **caractérisé par** l'unité de commande (14) qui permet à la soupape (15) de diriger le fluide frigorigène vers le compresseur (6) par la ligne de by-pass (16) au début du processus de séchage lorsque la pompe à chaleur (5) n'est pas surchauffée.

3. Un sèche-linge (1) selon dans la Revendication 1, **caractérisé par** l'unité de commande (14) qui permet à la soupape (15) de diriger le fluide frigorigène vers le compresseur (6) par l'échangeur de chaleur (11) si l'unité de commande (14) détecte une surchauffe dans la pompe à chaleur (5) en fonction des données de température reçues du capteur de température (13).

4. Un sèche-linge (1) selon l'une quelconque des revendications précédentes, **caractérisé par** un ventilateur de refroidissement (12) qui permet le refroidissement du compresseur (6), et l'échangeur de chaleur (11) qui est disposé à la partie de la conduite de fluide frigorigène (10) entre l'évaporateur (7) et le compresseur (6), s'étendant entre le ventilateur de refroidissement (12) et le compresseur (6).

5. Un sèche-linge (1) selon l'une quelconque des revendications précédentes, **caractérisé par** une ligne d'eau de condensation (18) qui présente un bac à condensation (17) dans lequel l'eau condensée dans l'évaporateur (7) est accumulée, l'échangeur de chaleur (11) en forme de tube qui est disposé entre la conduite de fluide frigorigène (10) entre l'évaporateur (7) et le compresseur (6), et une pompe (19) qui permet l'évacuation de l'eau dans le bac à condensation (17) en étant passée par l'échangeur de chaleur (11).

6. Un sèche-linge (1) selon dans la Revendication 5, **caractérisé par** l'unité de commande (14) qui permet l'évacuation de l'eau dans le bac à condensation (17) en étant passée par la ligne d'eau de condensation (18) et l'échangeur de chaleur (11) en actionnant la pompe (19) si l'unité de commande (14) détecte une surchauffe dans la pompe à chaleur (5) en fonction des données de température reçues du capteur de température (13).
